(19) Europäisches Patentamt / European Patent Office / Office européen des brevets

(11) **EP 1 509 759 B1**

(12) **EUROPEAN PATENT SPECIFICATION**

(45) Date of publication and mention of the grant of the patent:
**03.10.2007 Bulletin 2007/40**

(51) Int Cl.:
*G01N 21/03* (2006.01)    *G01N 21/35* (2006.01)
*G01N 21/61* (2006.01)

(21) Application number: **03727716.7**

(22) Date of filing: **29.05.2003**

(86) International application number:
**PCT/GB2003/002341**

(87) International publication number:
**WO 2003/102553 (11.12.2003 Gazette 2003/50)**

(54) **GAS SENSORS**

GASSENSOREN

DETECTEURS DE GAZ

(84) Designated Contracting States:
**AT BE BG CH CY CZ DE DK EE ES FI FR GR HU IE IT LI LU MC NL PT RO SE SI SK TR**

(30) Priority: **31.05.2002 GB 0212631**

(43) Date of publication of application:
**02.03.2005 Bulletin 2005/09**

(73) Proprietor: **E2V Technologies (UK) Limited Chelmsford, Essex CM1 2QU (GB)**

(72) Inventors:
• **HOPKINS, Graham P.**
Lane,
Chelmsford,
Essex CM1 2QU (GB)
• **HAYWARD, A., S.**
Lane,
Chelmsford,
Essex CM1 2QU (GB)

(74) Representative: **Loveless, Ian Mark**
**Reddie & Grose,**
**16 Theobalds Road**
**London WC1X 8PL (GB)**

(56) References cited:
EP-A- 0 825 430          US-A- 5 009 493
US-A- 5 170 064          US-B1- 6 194 735

## Description

FIELD OF THE INVENTION

This invention relates to apparatus for, and methods of, sensing gasses. The invention particularly relates to such methods and devices in which optical radiation is transmitted through a gas and subsequently detected to provide information concerning the gas.

BACKGROUND OF THE INVENTION

In a typical gas monitor, an infrared source is arranged to emit radiation, which passes through a gas to be monitored. Infrared radiation is absorbed by the gas and that remaining is subsequently detected by an infrared detector, such as a photodiode, thermopile or pyroelectric detector. A comparison is made between the source intensity and the intensity of radiation detected following passage through the gas to give the concentration of a target gas. The concentration is related to the intensity by the following equation:

$$I = I_o e^{-\epsilon cl}$$

where I is the intensity of radiation detected by the detector, $I_o$ is the intensity of radiation emitted at the source, $\epsilon$ is effectively a constant which is dependent on the particular gas being monitored, c is the gas concentration and 1 is the distance travelled by the radiation through the gas.

EP 0825430 discloses a gas monitor with a source and detector with walls arranged to shield light from the source to the detector. US 6194735 discloses a gas sensor with curved reflective surfaces to create an optical analysis path. US 5009493 discloses a gas sensor with a light source, including a slit arrangement.

The present invention seeks to provide a gas monitor having improved characteristics over those previously, known.

SUMMARY OF THE INVENTION

The invention is defined in the claims, to which reference is now directed.

An embodiment of the invention provides a gas sensor comprising a chamber arranged to admit gas, an optical source and detector means sensitive to light from the source, the detector means including a filter. Surface portions of ellipsoidal curvature are arranged to reflect light from the light source to the detector. The detector means is arranged to detect light from a predetermined directional range, so that only light reflected by the surface portions of ellipsoidal curvature reaches the detector. The source is configured to emit optical radiation in a predetermined directional range, such as a narrow solid angle at near normal incidence.

The provision of a directional source enables the sensor to be configured so that a large proportion of radiation is directed towards the detector along predetermined optical paths. Thus, even less of the radiation is scattered, or reaches the detector by other optical paths, further improving the signal-to-noise ratio of the sensor.

Advantageously, the directional ranges, such as the solid angles, are co-axial with the axis of the source and detector respectively.

The provision of a directional detector improves performance of the sensor, because the performance of the filter is much improved when receiving radiation from a predetermined directional range, for example a narrow solid angle centred at normal incidence. The use of a directional detector in conjunction with reflection from ellipsoidal surfaces ensures that light from the source to the detector travels a path of substantially constant length, and that light reflected in any other way reaching the sensor is minimised. The sensor can be configured so that the detector collects radiation that has travelled predetermined optical paths. Thus, little of the radiation reaches the detector by means of undesired optical paths, thereby improving the signal-to-noise ratio of the sensor and leading to a more accurate determination of gas concentration, particularly at low levels.

The invention is particularly useful when employed in a gas sensor described by our British patent No.2316172. This patent describes a gas sensor comprising a housing containing an infrared source and a detector, which are placed at the foci of respective ellipsoidal surfaces. Truncated ellipsoids provide a folded optical path for radiation from the source. Employing the present invention in such a gas sensor reduces the amount of light travelling other than by a desired folded optical path.

The chamber may further include gas admittance means. The detector and source may be located in a cylindrical housing having end walls. Regions of an end wall of the housing, and possibly adjacent regions of the cylinder may provide gas admittance means.

The end wall may include a reflector for the chamber, occupying a central region of the end wall, with the gas admittance means occupying the periphery of the wall.

The optical source is preferably an infrared source but sources and detectors operating in other parts of the optical spectrum may be used in other embodiments.

BRIEF DESCRIPTION OF THE FIGURES

An embodiment of the invention will now be described, by way of example, with reference to the accompanying drawings, in which:-

Figure 1 is a sectional schematic view of a gas sensor constructed according to the invention;

Figures 1a and 1b illustrate alternative embodiments of the gas admittance regions of the sensor of Figure 1;

Figure 2 is a plan view through II-II of Figure 1;

Figure 3 shows the geometry of ellipsoidal curvature of the gas sensor of Figure 1;

Figure 3a shows the source or detector in greater detail;

Figure 4 shows an alternative arrangement of ellipsoidal surface to include reflections for a main sensor and a reference sensor;

Figure 5 shows the geometry of ellipsoidal curvature of the gas sensor of Figure 4;

Figures 6a-d show various arrangements of the upper end wall 5; and

Figure 7 shows a further alternative arrangement of reflection surfaces incorporating a longer light path and further reflections.

DESCRIPTION OF A PREFERRED EMBODIMENT

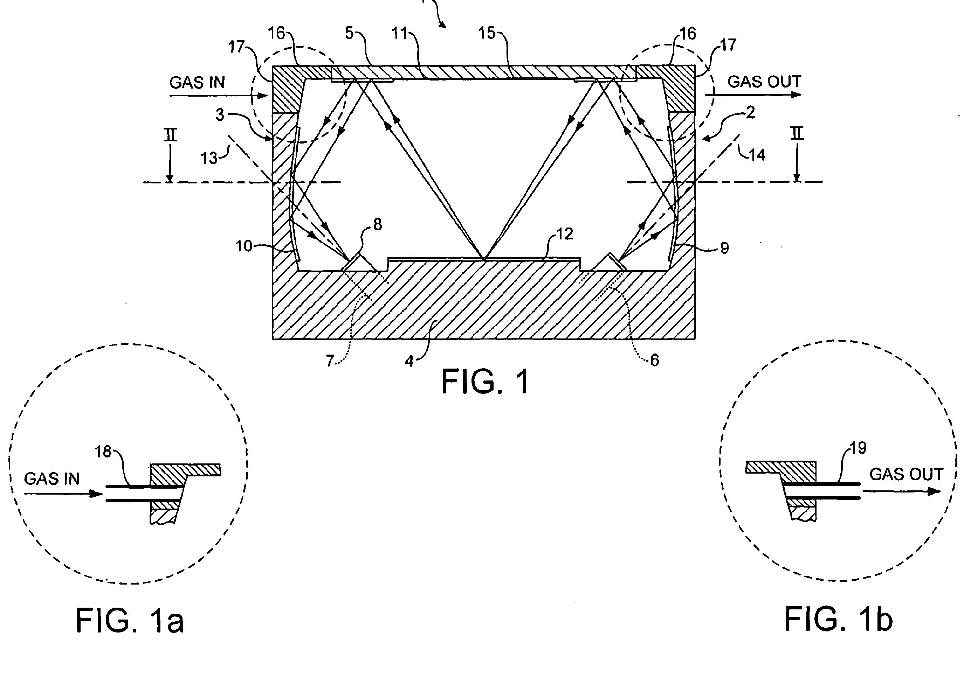

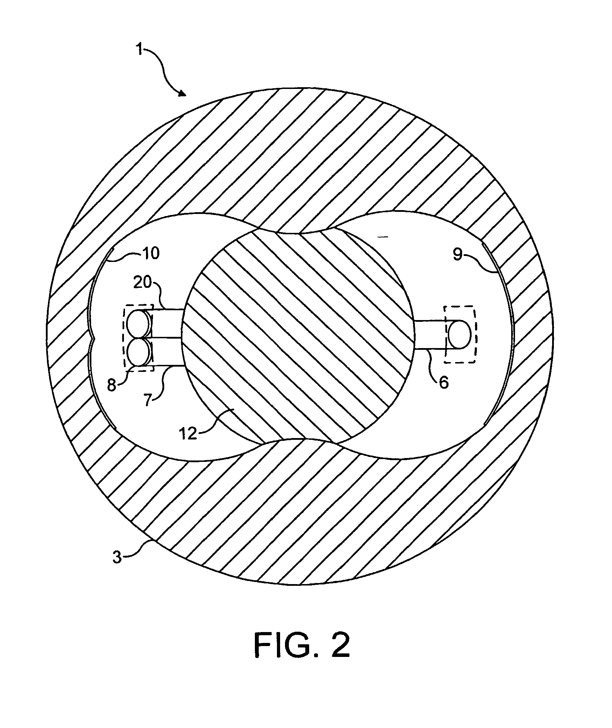

With reference to Figures 1 and 2, a gas sensor is shown and indicated generally by the reference numeral 1. The detector comprises a housing 2, which is preferably flameproof. The housing 2 comprises a generally cylindrical wall 3 with end walls 4 and 5. The housing 2 contains a source 6 of infrared radiation, mounted in one of the end walls 4. The housing also contains an infrared detector 7, which includes a bandpass filter 8, also mounted in the end wall 4. Portions 9 to 12 inclusive of the interior surfaces of the housing 2 are reflectors of infrared radiation. The filter 8 is arranged to be transparent to the strong fundamental absorption band of the gas being detected.

A constraint for gas sensors of the type described is the need to be small, typically an industry standard size of housing 2 of diameter 20mm and depth 15mm, whilst retaining as long an optical path length from source to detector as possible. Another industry standard size to which the invention could equally apply is 32mm diameter. The long optical path length is needed to ensure best sensitivity for gases of low concentrations. The longer the path length, the greater the effect on attenuation of light at the absorption band of the gas and hence the better the signal to noise ratio. However, we have also appreciated that the path length should be substantially constant for all light transmitted from the source to the detector. If light is able to travel through differing path lengths, then any change in intensity on introduction of the gas to be analysed will differ depending upon the path length. As a result, the variation due to the gas to be analysed in comparison to variation due to other factors, such as other gases or errors due to temperature changes, will be reduced. This effectively worsens the signal to noise ratio. In the embodiment shown, the path length is around 40mm.

In accordance with a first aspect of the invention, the detector 7 is directional, i.e. it is arranged to detect radiation incoming from a predetermined directional range. Preferably, the directional range comprises a predetermined solid angle, which may be centred on the axis 13 of the detector.

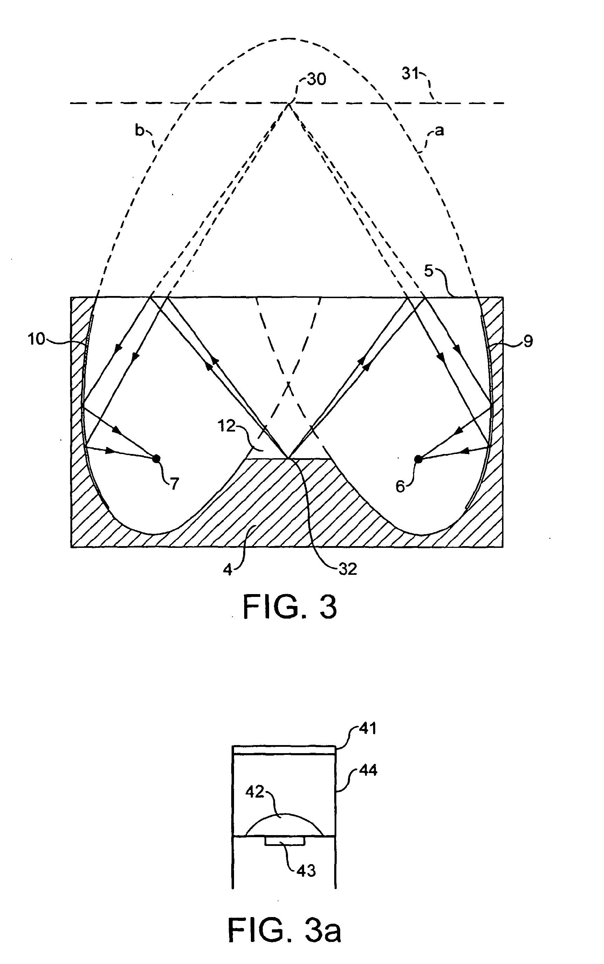

In conjunction with the two ellipsoidal surface portions, this ensures that light from the source to the detector within the limited range of angles all travels the same path length. This fact can be proven according to the geometry, but can be seen empirically with reference to Figure 3. Light from the source 3 is reflected from a surface portion 9 being shaped as a portion of all ellipsoid "a". This light is focused toward a point 30, but reflected back from a planar reflective portion of the inner surface of the wall 5 and focussed to a planar reflective region 12. The reflective region 12 is effectively at an image of the plane 31 containing the focus point 30 of the ellipsoids "a" and "b". This "folded" arrangement reduces the height of the sensor by roughly half whilst maintaining the path length. From the focus point 32 light is reflected via a further reflective region of wall 5 to a second reflective portion 10 of ellipsoidal shape defined by ellipsoid "b" and focussed to the detector shown schematically at 7. Thus, a comparatively long path length is achieved within a housing of small dimension. In particular, the path length for light from the source to the detector is substantially constant and unwanted reflections are avoided.

This arrangement also ensures that the detector collects radiation from a narrow cone of light, the solid angle being typically 10-12°. It has been found that the bandpass characteristic of the filter 8 associated with the detector is better defined when radiation impinges on it from predetermined directions, and preferably at near-normal incidence.

The source 6 is also directional i.e. is arranged to emit radiation in a predetermined directional range. Preferably, the directional range comprises a solid angle, which may be centred on the axis 14 of the source 6. This arrangement of the source ensures that the optical radiation follows predetermined optical paths, such as those illustrated in Figure 1, and is therefore more likely to be directed towards the detector. Thus, stray light from shorter or longer optical paths is reduced, thereby improving the signal-to-noise ratio of the sensor.

The source and detectors are placed symmetrically within the housing and are tilted between 30 and 45 degrees from the base of the housing.

The arrangement of the reflective surfaces 9 to 12 and the relative positions of components of the sensor form the subject of our patent No. GB2316172. The present invention permits an improved version of that sensor to be made, because the light in the chamber follows better-defined optical paths. A benefit of the present invention is that the reflective surfaces need only be localised for those optical paths.

The reflective wall 9 in the region of the source 6 is curved in three dimensions to define a part ellipsoid, with the source 6 being placed at one of its foci. The detector 7 is located at a focus defined by the adjacent curved surface 10 which is also defines a part ellipsoid. The reflective surfaces 9 and 10 need not be continuous. The end wall 5 opposite that on which the source 6 and detector 7 are mounted includes a reflective inner surface 11, which is planar. The wall 4 between the source 6 and detector 7 has a reflective region 12, which is also planar and parallel to the end wall 5.

The configuration of the reflective surfaces 9 to 12 and locations of the source 6 and detector 7 are such that infrared radiation directionally emitted from the source is directed onto the ellipsoidal surface 9. Radiation reflected from the surface 9 is then incident on the planar surface 11 from which it is reflected and focussed on the region 12 between the source 6 and detector 7. The radiation is then directed onto the ellipsoidal surface 10 via the surface 11 to the detector 7, where it is focussed. Thus, the radiation undergoes five reflections before being received at the detector 7.

The provision of localised reflectors 9 to 12 frees up other portions of the chamber for other uses. For example, at least some of these portions may be arranged to admit the gas to be sensed. In the embodiment of Figure 1, only the central region 15 of the wall 5 need provide the planar reflector 11. Thus, peripheral regions 16 of the wall 5 may include gas diffusion regions, such as particulate filters or sintered material.

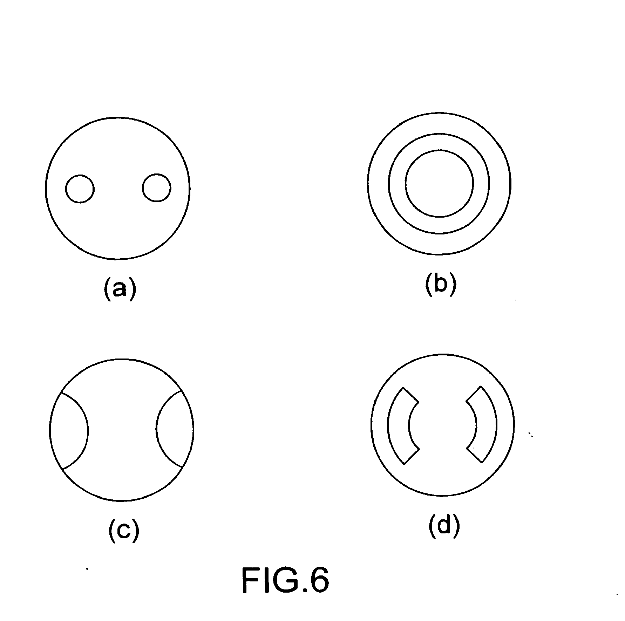

The central region 15 may also be arranged so that only portions are reflective. As can be seen in Figure 1, only two specific portions need to be reflective. The remainder could be foraminous, or have various apertures for the admittance of gas. A variety of such arrangements are shown in Figures 6a-d. in each example, at least a pair of reflective portions are provided, or an annular region (Figure 6b) provided to reflect the light. The remainder of the upper surface 5 may be open.

It is preferable to be able to allow as much gas as possible to diffuse into the housing 2, to increase the likelihood of a positive and rapid identification of the target gas, and a measure of its concentration. Therefore, other regions of the housing 2 may be arranged to admit gas. For example, regions 17 of the cylindrical wall 3 not providing reflective surfaces for the light may include particulate filters, mesh or sintered material. The regions 16 in the top wall 5 and the regions 17 in the cylindrical wall 3 may be joined together to form shoulders of diffusion material, which may extend around the circumference of the detector 1.

Figures 1a and 1b illustrate alternative gas admittance means. In this embodiment, an inlet port 18 and an outlet port 19 are provided, through which gas may be directed to pass into the housing 2. The ports 18, 19 are embedded in diametrically opposite sides of the cylindrical wall 3.

The housing 2 also includes a reference detector 20 (shown in Figure 2), which is located adjacent to the detector 7 and used to compensate for changes in operating conditions and with time. The reference detector 20 includes a different filter to that fitted in the active detector 7 and does not respond to the target gas. By comparing the signals from the active detector 7 and the reference detector 20, the user can discriminate the signal reduction due to the target gas, from that due to ambient and physical variations. The reference detector 20 is preferably located immediately adjacent the active detector 7 so that the detector and reference collect radiation that has travelled similar optical paths. To aid this, the reference 20 and detector 7 may be contained in a single detector package.

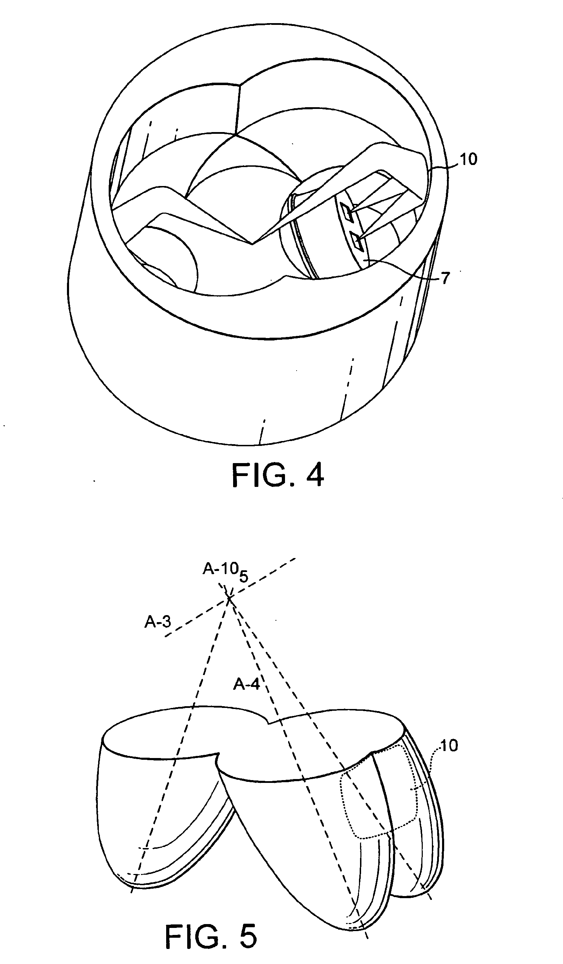

A further possible arrangement for the reference sensor is shown in Figures 4 and 5. As can be seen in Figure 4, the reference sensor and main sensor are adjacent to one another. To improve the delivery of light to each sensor a portion of the wall comprises a reflective surface 10 as previously described, but have shaped so as to form portions of a pair of overlapping ellipsoid surfaces. This can be seen in Figure 5. This arrangement ensures that light travelling to the main sensor and reference sensor travels the same optical path as far as possible and only splits and then travels a similar optical path for the last portion of the distance.

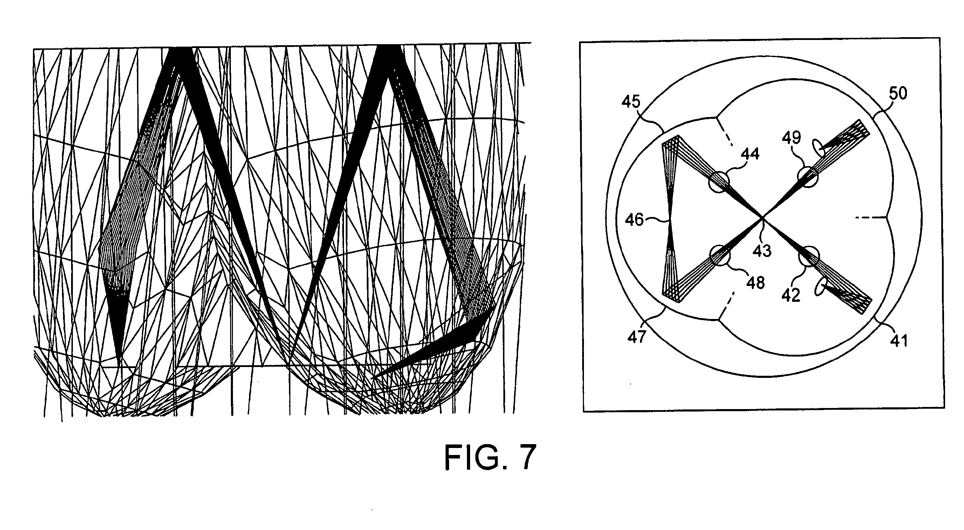

A still further arrangement is shown in plan view in Figure 7 and increases the path length further. In this arrangement three ellipsoidal surface portions are arranged such that light from a source reflects off one ellipsoidal portion 41, off a planar upper surface 42, focussed to a planar lower surface 43, to the upper 44, to a further ellipsoid portion 45, the lower 46, ellipsoidal 47, upper 48, lower 43, upper 49 and final ellipsoidal 50. Thus there are a total of 11 reflections giving roughly twice the path length of the previously described 5 reflection arrangement. Common to both, is the provision of two reflective surfaces of partial ellipsoidal shape arranged to reflect light from a source to a detector, the detector only accepting a limited range of angles so as to receive light only reflected by the reflective surface portions. In this embodiment, the path length is in the region 80-100mm.

A suitable infrared source is a tungsten lamp with a directional reflector, which provides a directional broadband infrared thermal source. Other sources include LEDs or lasers employed in conjunction with directional reflectors. Alternatively, diodes with immersion lenses may be employed.

The reflective surfaces may comprise layers of plated gold to provide good reflectance.

The length of the optical path through the chamber may be altered by adjusting the angle of tilt of the detector and source. Further alterations in optical path length may be achievable by adjusting the separation between the planar reflective surfaces 11, 12. Alternatively, or additionally, the dimensions of the inner surfaces of the chamber may be changed so that the ellipsoids they represent are of different sizes or have a different angular separation.

The chamber may be a single component or may comprise a plurality of pieces. A suitable manufacturing process for the contours of the chamber is that of machine turning. Alternatively, moulding in plastics or metal injection may be utilised. These processes are well known industrial techniques and may be readily employed by the skilled person.

The light source and detector are preferably matched pairs in the sense that their construction and angles of emission and collection are much the same, for example 10-12 degrees. Preferred choices are LEDs or photodiodes with immersion lenses or optical concentrators and IR narrow bandpass filters. An example detector is shown in Figure 3A. The detector comprises the active detector portion 43, here mounted to an immersion lens 42 behind an optical filter 41 within a housing 44. The immersion lens 42 defines the range of angles of acceptance focussed to the active device 43. As previously described, the prime benefit is in avoiding stray light paths, but this also ensures that the light passing through filter 41 that is sensed travels at a near normal angle. The filter is of a wave plate type, and so near normal incidence ensures best bandpass performance.

The source and detector packages are typically 4.7mm diameter and 3 to 5 mm high depending upon the type selected. The immersion lenses are typically germanium in the form of a hemisphere of 1 to 3mm diameter. Other forms of lens such as the flat Fresnel type or optical concentrators like the Winston cone are also possible. These have a refractive index of about 4 to immerse an IR LED and photodiode. The filters typically are centred on 4.2 microns for $CO_s$, 3.3 microns for $CH_4$ and 4.0 microns for a reference detector.

The invention may be used in conjunction with more than one detector and arrangements having more or fewer reflections than the specific embodiments described are within the scope of the invention.

**Claims**

1. A gas sensor (1) of the type having a housing (2) defining a chamber within which light is transmitted from a source (6) to a detector (7) through an optical path within the chamber, comprising:

   a source (6) arranged to provide light to a detector through an optical path;

   - at least two reflective surfaces (9,10) of part ellipsoidal shape arranged to reflect light from the source to the detector through the optical path;
   - a first planar surface (12) and a second planar surface with at least two reflective regions, the second surface arranged within the optical path to reflect light between the reflective surfaces of part ellipsoidal shape and the first planar surface, whereby light is reflected from one of the two surfaces of part ellipsoidal shape (9) to the other;
   - **characterised in that** the detector is arranged to detect light only from a predetermined directional range of a narrow solid angle centred at normal incidence, and wherein the optical source is arranged to emit light in a predetermined directional range of a narrow solid angle at near normal incidence, such that only light transmitted through the optical path via the at least two reflective surfaces (9,10) is detected by the detector, and wherein the first planar surface (12), the second planar surface with at least two reflective regions and reflective surfaces of part ellipsoidal shape all comprise reflective surface areas which are only localised for the optical path.

2. A gas sensor according to claim 1, wherein the sensor includes an optical element (42) to select a range of angles of acceptance.

3. A gas sensor according to claim 2, wherein the optical element comprises an immersion lens (42).

4. A sensor as claimed in any preceding claim, wherein at least one other portion of the chamber comprises means (17) for admitting gas into the chamber.

5. A sensor as claimed in claim 4, wherein the gas admittance means includes sintered material (17).

6. A sensor as claimed in claim 4, wherein the gas admittance means includes a particulate filter (17).

7. A sensor as claimed in any preceding claim, wherein the two reflective surfaces define foci at which the source and detector are located and said first planar reflective surface defines part of the optical path between them.

8. A sensor as claimed in any preceding claim, wherein the source is at a focus of a first part ellipsoidal surface and the detector is at a focus of a second part ellipsoidal surface and the first and second ellipsoids share a common virtual focus.

9. A sensor as claimed in any preceding claim wherein the source and detector are contained within a flameproof housing.

10. A sensor as claimed in any preceding claim, wherein the housing comprises a cylinder having end walls (4, 5).

11. A sensor as claimed in claim 9, wherein the source and detector are mounted on a common first end wall (4) of the housing.

12. A sensor as claimed in claim 11, wherein a second end wall (5) includes the second planar surface and gas admittance means.

13. A sensor as claimed in claim 12, wherein the second planar surface comprises a central region (15) of the second end wall and the gas admittance means comprises a peripheral region (16) of the second end wall.

14. A sensor as claimed in claim 13, wherein the gas admittance means further includes a region of the cylinder adjacent the second end wall.

15. A sensor as claimed in any preceding claim, wherein the optical source is an infrared source.

16. A sensor as claimed in any preceding claim wherein the source is arranged to heat substantially all the surfaces from which light is reflected to a temperature above ambient temperature.

17. A sensor as claimed in any preceding claim, further including a reference detector located adjacent the detector so that the reference detector and the detector collect light that has travelled similar optical paths.

18. A sensor as claim in claim 17, wherein one of the two reflective surfaces is shaped so as to form portions of a pair of overlapping part ellipsoidal surfaces (10), whereby light travelling from the source to the detector and reference detector travels the same optical path as far as the pair of overlapping part ellipsoidal surfaces and is split for the last portion of the distance.

**Patentansprüche**

1. Gassensor (1) des Typs mit einem Gehäuse (2), das eine Kammer definiert, innerhalb der Licht von einer Quelle (6) zu einem Detektor (7) durch einen optischen Pfad innerhalb der Kammer übertragen wird, umfassend:

   - eine Quelle (6) mit der Aufgabe, Licht zu einem Detektor durch einen optischen Pfad zu senden;
   - wenigstens zwei reflektierende Flächen (9, 10) mit teilellipsoidischer Gestalt mit der Aufgabe, Licht von der Quelle durch den optischen Pfad zum Detektor zu reflektieren;
   - eine erste planare Fläche (12) und eine zweite planare Fläche mit wenigstens zwei reflektierenden Regionen, wobei die zweite Fläche in dem optischen Pfad angeordnet ist, um Licht zwischen den reflektierenden Flächen mit teilellipsoidischer Gestalt und der ersten planaren Fläche zu reflektieren, wobei Licht von einer der beiden Flächen mit teilellipsoidischer Gestalt (9) zur anderen reflektiert wird;
   - **dadurch gekennzeichnet, dass** der Detektor so angeordnet ist, dass er Licht nur von einem vorbestimmten Richtungsbereich eines schmalen Raumwinkels, zentriert auf senkrechtem Einfall, erfasst, und wobei die optische Quelle so angeordnet ist, dass sie Licht in einem vorbestimmten Richtungsbereich eines schmalen Raumwinkels mit fast senkrechtem Einfall aussendet, so dass lediglich Licht, das durch den optischen Pfad über die wenigstens zwei reflektierenden Flächen (9, 10) übertragen wird, von dem Detektor erfasst wird, und wobei die erste planare Fläche (12), die zweite planare Fläche mit wenigstens zwei reflektierenden Regionen und die reflektierenden Flächen mit teilellipsoidischer Gestalt reflektierende Flächenbereiche umfassen, die nur für den optischen Pfad positioniert sind.

2. Gassensor nach Anspruch 1, wobei der Sensor ein optisches Element (42) beinhaltet, um einen Bereich von Öffnungswinkeln auszuwählen.

3. Gassensor nach Anspruch 2, wobei das optische Element eine Immersionslinse (42) umfasst.

4. Sensor nach einem der vorherigen Ansprüche, wobei wenigstens ein anderer Abschnitt der Kammer ein Mittel (17) zum Einlassen von Gas in die Kammer umfasst.

5. Sensor nach Anspruch 4, wobei das Gaseinlassmittel gesintertes Material (17) beinhaltet.

6. Sensor nach Anspruch 4, wobei das Gaseinlassmittel ein Partikelfilter (17) beinhaltet.

7. Sensor nach einem der vorherigen Ansprüche, wobei die beiden reflektierenden Flächen Brennpunkte definieren, an denen sich die Quelle und der Detektor befinden, und die genannte erste planare reflektierende Fläche einen Teil des optischen Pfads dazwischen definiert.

**8.** Sensor nach einem der vorherigen Ansprüche, wobei die Quelle an einem Brennpunkt einer ersten teilellipsoidischen Fläche ist und der Detektor an einem Brennpunkt einer zweiten teilellipsoidischen Fläche ist und das erste und das zweite Ellipsoid einen gemeinsamen virtuellen Brennpunkt haben.

**9.** Sensor nach einem der vorherigen Ansprüche, wobei die Quelle und der Detektor in einem flammfesten Gehäuse enthalten sind.

**10.** Sensor nach einem der vorherigen Ansprüche, wobei das Gehäuse einen Zylinder mit Endwänden (4, 5) umfasst.

**11.** Sensor nach Anspruch 9, wobei die Quelle und der Detektor an einer gemeinsamen ersten Endwand (4) des Gehäuses montiert sind.

**12.** Sensor nach Anspruch 11, wobei eine zweite Endwand (5) die zweite planare Fläche und das Gaseinlassmittel beinhaltet.

**13.** Sensor nach Anspruch 12, wobei die zweite planare Fläche eine zentrale Region (15) der zweiten Endwand umfasst und das Gaseinlassmittel eine periphere Region (16) der zweiten Endwand umfasst.

**14.** Sensor nach Anspruch 13, wobei das Gaseinlassmittel ferner eine Region des Zylinders neben der zweiten Endwand beinhaltet.

**15.** Sensor nach einem der vorherigen Ansprüche, wobei die optische Quelle eine Infrarotquelle ist.

**16.** Sensor nach einem der vorherigen Ansprüche, wobei die Quelle so angeordnet ist, dass im Wesentlichen alle Flächen, von denen Licht reflektiert wird, auf eine Temperatur über Umgebungstemperatur erwärmt werden.

**17.** Sensor nach einem der vorherigen Ansprüche, der ferner einen Referenzdetektor neben dem Detektor beinhaltet, so dass der Referenzdetektor und der Detektor Licht auffangen, das über ähnliche optische Pfade gewandert ist.

**18.** Sensor nach Anspruch 17, wobei eine der beiden reflektierenden Flächen so gestaltet ist, dass sie Abschnitte eines Paares von überlappenden, teilellipsoidischen Flächen (10) bildet, wobei Licht, dass von der Quelle zum Detektor und Referenzdetektor wandert, über denselben optischen Pfad so weit wie das Paar überlappender, teilellipsoidischer Oberflächen wandert und für den letzten Abschnitt der Strecke gespalten wird.

**Revendications**

**1.** Capteur de gaz (1) du type ayant un logement (2) définissant une chambre à l'intérieur de laquelle une lumière est transmise depuis une source (6) vers un détecteur (6) le long d'une trajectoire optique à l'intérieur de la chambre, comprenant :

- une source (6) agencée pour fournir une lumière à un détecteur le long d'une trajectoire optique ;
- au moins deux surfaces réflectrices (9, 10) d'une forme ellipsoïdale partielle agencée pour réfléchir la lumière depuis la source vers le détecteur le long de la trajectoire optique ;
- une première surface plane (12) et une seconde surface plane (9, 10) comportant au moins deux régions réflectrices, la seconde surface étant disposée dans la trajectoire optique afin de réfléchir la lumière entre les surfaces réflectrices d'une forme ellipsoïdale partielle et la première surface plane, de telle sorte que la lumière soit réfléchie depuis l'une des deux surfaces de forme ellipsoïdale partielle (9) vers l'autre.
- **caractérisé en ce que** le détecteur est agencé pour détecter la lumière provenant uniquement d'une plage directionnelle prédéterminée d'un angle solide étroit centrée à une incidence normale, et dans lequel la source optique est agencée pour émettre la lumière dans une plage directionnelle prédéterminée d'un angle solide étroit à une incidence presque normale, de telle sorte que seule la lumière transmise le long de la trajectoire optique par l'intermédiaire des au moins deux surfaces réflectrices (9, 10) soit détectée par le détecteur, et dans lequel la première surface plane (12), la seconde surface plane comportant au moins deux régions réflectrices et les surfaces réflectrices de forme ellipsoïdale partielle comprennent toutes des zones de surface réflectrices qui ne sont que localisées que pour la trajectoire optique.

**2.** Capteur de gaz selon la revendication 1, dans lequel le capteur comprend un élément optique (42) pour sélectionner une plage d'angles d'acceptance.

**3.** Capteur de gaz selon la revendication 2, dans lequel l'élément optique comprend une lentille à immersion (42).

**4.** Capteur de gaz selon l'une quelconque des revendications précédentes, dans lequel au moins une autre partie de la chambre comprend un moyen (17) pour admettre un gaz dans la chambre.

**5.** Capteur de gaz selon la revendication 4, dans lequel le moyen d'admission de gaz comporte une matière frittée (17).

**6.** Capteur de gaz selon la revendication 4, dans lequel le moyen d'admission de gaz comporte un filtre contre les matières en suspension (17).

**7.** Capteur selon l'une quelconque des revendications précédentes, dans lequel les deux surfaces réflectrices définissent des foyers auxquels la source et le détecteur sont placés et ladite première surface réflectrice définit une partie de la trajectoire optique entre eux.

**8.** Capteur selon l'une quelconque des revendications précédentes, dans lequel la source est située à un foyer d'une première surface ellipsoïdale partielle et le détecteur est situé à un foyer d'une seconde surface ellipsoïdale partielle et les première et seconde ellipsoïdes partagent un foyer virtuel commun.

**9.** Capteur selon l'une quelconque des revendications précédentes, dans lequel la source et le détecteur sont contenus dans un logement antidéflagrant.

**10.** Capteur selon l'une quelconque des revendications précédentes, dans lequel le logement comprend un cylindre ayant des parois d'extrémité (4, 5).

**11.** Capteur de gaz selon la revendication 9, dans lequel la source et le détecteur sont montés sur une première paroi d'extrémité commune (4) du logement.

**12.** Capteur de gaz selon la revendication 11, dans lequel une seconde paroi d'extrémité (5) comporte la seconde surface plane et un moyen d'admission de gaz.

**13.** Capteur de gaz selon la revendication 12, dans lequel la seconde surface plane comprend une région centrale (15) de la seconde paroi d'extrémité et le moyen d'admission de gaz comprend une région périphérique (16) de la seconde paroi d'extrémité.

**14.** Capteur de gaz selon la revendication 13, dans lequel le moyen d'admission de gaz comporte en outre une région du cylindre adjacente à la seconde paroi d'extrémité.

**15.** Capteur selon l'une quelconque des revendications précédentes, dans lequel la source optique est une source infrarouge.

**16.** Capteur selon l'une quelconque des revendications précédentes, dans lequel la source est agencée pour chauffer essentiellement toutes les surfaces à partir desquelles la lumière est réfléchie à une température supérieure à la température ambiante.

**17.** Capteur selon l'une quelconque des revendications précédentes, comportant en outre un détecteur de référence adjacent au détecteur de telle sorte que le détecteur de référence et le détecteur collectent la lumière qui s'est propagée le long de trajectoires optiques semblables.

**18.** Capteur selon la revendication 17, dans lequel l'une des deux surfaces réflectrices est conformée de façon à former des parties d'une paire de surfaces ellipsoïdales partielles chevauchantes (10), de telle sorte que la lumière se propageant depuis la source jusqu'au détecteur et jusqu'au détecteur de référence se propage le long de la même trajectoire optique aussi loin que la paire de surfaces ellipsoïdales partielles chevauchantes et soit divisée pour la dernière partie de la distance.

GAS IN

GAS OUT

16 17 5 11 15 16 17

3 2

II II

13 14

10 8 12 9

7 4 6

**FIG. 1**

GAS IN 18

**FIG. 1a**

19 GAS OUT

**FIG. 1b**

EP 1 509 759 B1

FIG. 2

FIG. 3

FIG. 3a

FIG. 4

FIG. 5

(a)

(b)

(c)

(d)

FIG.6

FIG. 7

EP 1 509 759 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0825430 A
- US 6194735 B
- US 5009493 A
- GB 2316172 A